# DEMANDE DE BREVET EUROPEEN

(11) **EP 2 296 405 A1**
(43) Date de publication de la demande: **16.03.2011**
(21) Numéro de dépôt: 10354043.1
(22) Date de dépôt: 06.09.2010
(51) Int. Cl.: H04W 40/12, H04W 84/18

(54) **Dispositif et procédé de communication sans fil, et système comportant un tel dispositif**

(30) Priorité: 15.09.2009 FR 0904385
(71) Demandeur: Schneider Electric Industries SAS, 92500 Rueil-Malmaison (FR)
(72) Inventeur: Coutelou, Olivier, 38050 Grenoble Cedex 09 (FR); Cochard, Nicolas, 38050 Grenoble Cedex 09 (FR); Thonet, Gilles, 38050 Grenoble Cedex 09 (FR)
(74) Mandataire: Tripodi, Paul

(57) **Abrégé**

Le dispositif de communication passerelle pour réseaux de communication sans fil reçoit des messages d'un émetteur à faible (1) énergie et communique avec un réseau (5). Dans un système comportant plusieurs dispositifs passerelle pour un émetteur à faible (1) énergie, un dispositif passerelle maitre est déterminé. La détermination d'un dispositif passerelle maitre est basée sur des indicateurs de qualité de réception (RQI) des dispositifs passerelle situés dans ladite zone de réception (A) de messages émis par ledit émetteur (1) à faible énergie. Le dispositif passerelle ayant l'indicateur de qualité de réception (RQI) le plus élevé est sélectionné pour être ledit dispositif passerelle maitre (6M). Le procédé de communication détermine aussi de la même manière un dispositif passerelle maitre. Le dispositif passerelle maitre sélectionne ensuite un dispositif passerelle de sauvegarde (6B) pour mémoriser des tables de liens et dans certains cas pour agir à la place du maitre.

## Description

### DOMAINE TECHNIQUE

L'invention concerne un dispositif de communication passerelle pour réseaux de communication sans fil comportant :
- des moyens de réception de messages de communication émis par des émetteurs à faible énergie.
- des moyens d'émission et de réception de messages d'un réseau de communication, et
- des moyens de traitement de messages de communication.

L'invention concerne aussi un système de communication pour réseaux de communication sans fil comportant :
- au moins un réseau de communication,
- au moins un dispositif émetteur faible énergie pour envoyer des messages à un dispositif destinataire à travers ledit réseau de communication, et
- au moins deux dispositifs de communication passerelle pouvant recevoir des messages dudit dispositif émetteur à faible énergie et communiquer lesdits messages sur le réseau de communication.

L'invention concerne aussi un procédé de communication pour réseaux de communication sans fil comportant au moins un dispositif d'émission faible énergie et au moins deux dispositifs passerelle pouvant recevoir des messages dudit dispositif à faible énergie et émettre et recevoir des messages du réseau de communication.

### ETAT DE LA TECHNIQUE

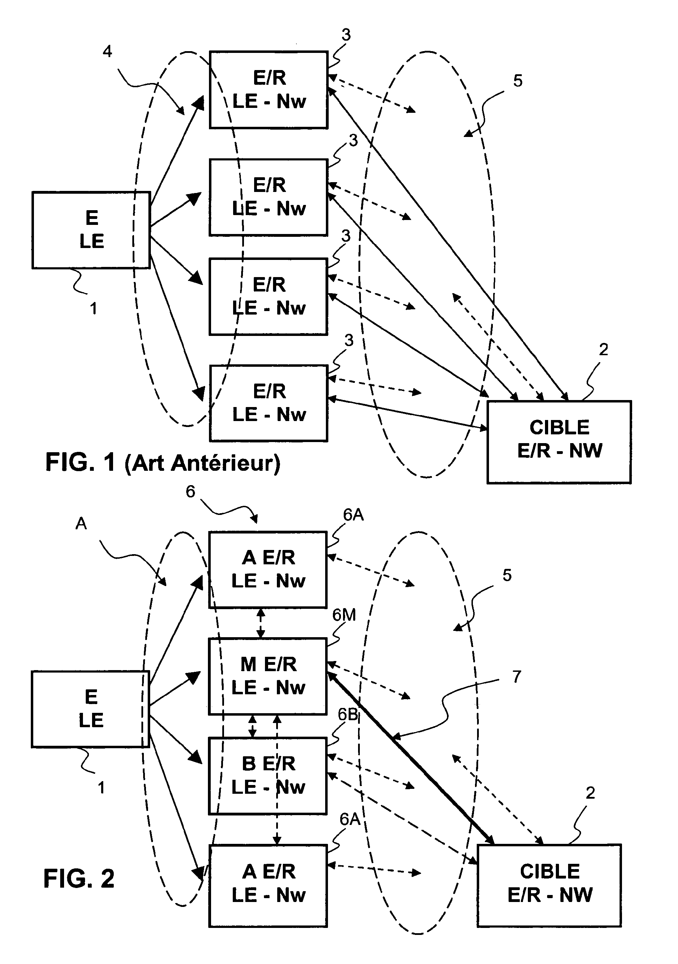

Dans des réseaux de communication existants comme celui représenté sur la figure 1, des dispositifs de communication sans fil à faible énergie ou à faible puissance 1 émettent des messages destinés à des dispositifs cibles destinataires 2. Généralement, la faible portée des émetteurs à faible énergie ne permet pas d'atteindre directement la cible. Pour assurer la liaison entre l'émetteur et le destinataire, des dispositifs passerelle 3 peuvent recevoir les messages faible énergie dans une zone limitée 4 de réception et communiquer sur un réseau 5 sans fil avec des puissances d'émission et des énergies plus élevées.

Généralement, les émetteurs à faible énergie sont dans des dispositifs autoalimentés notamment pour la télécommande d'appareils électriques. Certains sont sans pile et génèrent leur propre énergie à chaque action extérieure. Des dispositifs passerelle et les réseaux peuvent être du type décrits dans la demande de brevet EP1850203. Notamment, en utilisant des réseaux maillés selon la technologie dite "ZigBee" de l'association "ZigBee Alliance".

Dans les réseaux de communication de l'état de la technique, les émetteurs faibles énergie émettent dans une zone de réception réduite et plusieurs dispositifs passerelle prennent le relai pour envoyer ou router le message vers la cible ou le dispositif destinataire. Ainsi le destinataire risque de recevoir plusieurs fois le même message. Même si le numéro de séquence du message permet à la cible de traiter qu'une seule fois le message, un tel système risque de générer une augmentation importante du trafic dans le réseau.

### EXPOSE DE L'INVENTION

L'invention a pour but un dispositif passerelle pour réseau de communication sans fil et un système comportant de tels dispositifs et un procédé de communication pour réseau de communication sans fil.

Un dispositif de communication passerelle pour réseaux de communication sans fil selon l'invention comportant :
- des moyens de réception de messages de communication émis par des émetteurs à faible énergie.
- des moyens d'émission et de réception de messages d'un réseau de communication, et
- des moyens de traitement de messages de communication,
comporte
- des moyens de détermination d'un indicateur de qualité de réception associé à chaque message reçu d'un émetteur à faible énergie,
- des moyens de mémorisation dudit indicateur de qualité de réception,
- des moyens de réception de messages de notification émis par d'autres dispositifs passerelle d'une zone de réception et comportant dans leurs trames un identifiant du dispositif passerelle émetteur, un indicateur de qualité de réception associé et un numéro de séquence dudit message, et
- des moyens de détermination d'un dispositif passerelle maitre basés sur des indicateurs de qualité de réception des dispositifs passerelle situés dans ladite zone de réception de messages émis par ledit émetteur à faible énergie, le dispositif passerelle ayant l'indicateur de qualité de réception le plus élevé est sélectionné pour être ledit dispositif passerelle maitre.

Avantageusement, le dispositif de communication comporte:
- des moyens de mémorisation en tant que dispositif passerelle maitre pour un dispositif émetteur faible énergie et des moyens d'émission en priorité dans le réseau de messages venant dudit émetteur faible énergie,
- des moyens de mémorisation des identifiants de dispositifs passerelle situé dans ladite zone de réception, et
- des moyens d'acquittement pour envoyer aux autres dispositifs passerelle de la dite zone d'indication que le message est envoyé audit dispositif destinataire.

Dans un mode de réalisation préférentiel, le dispositif de communication comporte:
- des moyens de détermination d'un dispositif passerelle de sauvegarde basés sur des indicateurs de qualité de réception des dispositifs passerelle situés dans une zone de réception de messages émis par ledit émetteur à faible énergie, le dispositif passerelle ayant l'indicateur de qualité de réception le plus élevé après celui dudit dispositif passerelle maitre est sélectionné pour être ledit dispositif passerelle de sauvegarde, et
- des moyens de mémorisation pour mémoriser une copie des identifiants de dispositifs passerelle situés dans ladite zone de réception mémorisés dans ledit dispositif passerelle maitre.

Dans un système de communication pour réseaux de communication sans fil selon l'invention comportant :
- au moins un réseau de communication,
- au moins un dispositif émetteur faible énergie pour envoyer des messages à un dispositif destinataire à travers ledit réseau de communication, et
- au moins deux dispositifs de communication passerelle pouvant recevoir des messages dudit dispositif émetteur à faible énergie et communiquer lesdits messages sur le réseau de communication,
au moins deux dispositifs de communication passerelle sont des dispositifs de communication tels que définis ci-dessus, au moins un premier desdits dispositifs passerelle étant déterminé en tant que dispositif passerelle maitre pour le au moins un dispositif émetteur faible énergie.

De préférence, dans le système de communication au moins un second desdits dispositif passerelle est déterminé en tant que dispositif passerelle de sauvegarde pour le dispositif passerelle maitre associé audit dispositif émetteur faible énergie, ledit dispositif passerelle de sauvegarde comportant une copie d'une table de liens dudit dispositif passerelle maitre.

Procédé de communication selon l'invention pour réseaux de communication sans fil comportant au moins un dispositif d'émission faible énergie et au moins deux dispositifs passerelle pouvant recevoir des messages dudit dispositif à faible énergie et émettre et recevoir des messages du réseau de communication comporte
- l'envoi par un dispositif d'émission faible énergie d'un message destiné à au moins un dispositif destinataire cible,
- la réception par au moins deux dispositifs passerelle dudit message
- la détermination d'un dispositif passerelle maitre pour ledit dispositif émetteur faible énergie par la sélection d'un dispositif passerelle ayant un indicateur de qualité de réception le plus élevé parmi des dispositifs passerelle recevant les messages dudit dispositif à faible énergie.

Avantageusement, le procédé de communication la détermination d'un nouveau dispositif passerelle maitre à l'initialisation, lorsque l'ancien dispositif passerelle maitre est défaillant, lorsque l'ancien dispositif passerelle maitre n'a plus le meilleur indice de qualité de réception ou lorsque le dispositif émetteur faible énergie est déplacé.

Dans un mode de réalisation préférentiel, le procédé de communication comporte la désignation d'un dispositif passerelle de sauvegarde pour sauvegarder des données d'association entre ledit dispositif passerelle maitre, ledit dispositif destinataire et le dispositif émetteur faible énergie.

De préférence, la désignation d'un dispositif passerelle de sauvegarde comporte la copie desdites données d'association du dispositif passerelle maitre dans une table dudit dispositif passerelle de sauvegarde.

Avantageusement, le procédé de communication comporte l'envoi par un dispositif passerelle de sauvegarde de messages destinés à un dispositif destinataire en cas de défaillance dudit dispositif passerelle maitre.

Le procédé de communication comporte un traitement de redondance comportant:
- la réception par un dispositif passerelle maitre d'un premier message basse énergie émis par un dispositif faible énergie dans sa zone de réception,
- la réception par un dispositif passerelle de ladite zone de réception dudit premier message basse énergie,
- la notification dudit premier message par ledit dispositif passerelle de la zone de réception audit dispositif passerelle maitre, et
- l'acquittement par ledit dispositif maitre de l'envoi du premier message à un dispositif destinataire.

Dans un mode de réalisation préférentiel, le procédé de communication comporte un traitement de mobilité comportant :
- le déplacement d'un dispositif émetteur à basse énergie,
- la réception d'un second message émis par ledit émetteur à basse énergie dans une seconde zone de réception,
- la détermination d'un nouveau dispositif passerelle maitre parmi les dispositifs passerelle de ladite seconde zone recevant le second message,
- l'annonce du nouveau maitre à au réseau de communication,
- l'identification du maitre précédent,
- la récupération des données par le nouveau maitre,
- l'émission de messages au dispositif destinataire, et
- La désignation d'un nouveau dispositif passerelle de sauvegarde par le nouveau dispositif passerelle maitre.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un réseau de communication connu,
- la figure 2 représente un schéma d'un réseau de communication selon un mode de réalisation de l'invention,
- la figure 3 représente un schéma block d'un dispositif passerelle selon un mode de réalisation de l'invention,
- la figure 4 représente un premier organigramme de fonctionnement d'un dispositif passerelle maitre d'un procédé selon un mode de réalisation de l'invention,
- la figure 5 représente un second organigramme de fonctionnement d'un dispositif passerelle de sauvegarde d'un procédé selon un mode de réalisation de l'invention,
- la figure 6 représente un troisième organigramme de fonctionnement d'un dispositif passerelle de la zone de réception d'un procédé selon un mode de réalisation de l'invention,
- la figure 7 représente un organigramme de détermination d'un dispositif passerelle maitre d'un procédé selon un mode de réalisation de l'invention,
- la figure 8 représente un organigramme de désignation d'un dispositif passerelle de sauvegarde d'un procédé selon un mode de réalisation de l'invention,
- la figure 9 représente un organigramme de traitement d'un déplacement d'un dispositif émetteur faible énergie d'un procédé selon un mode de réalisation de l'invention, et
- les figures 10A à 10F illustrent le traitement d'un déplacement d'un dispositif émetteur faible énergie d'un procédé selon un mode de réalisation de l'invention.

### DESCRIPTION DETAILLEE DE MODES DE REALISATION PREFERES

Un système de communication pour réseaux de communication sans fil selon un mode de réalisation de l'invention est représenté sur la figure 2. Ce système comporte au moins un dispositif émetteur faible énergie 1 pour envoyer des messages à un dispositif destinataire 2 et au moins deux dispositifs de communication passerelle 6, 6A, 6M, 6B. Les dispositifs 6 pouvant recevoir des messages dudit dispositif émetteur 1 faible énergie communiquent lesdits messages sur le réseau de communication à travers ledit réseau de communication sans fil 5. Parmi les dispositifs de communication passerelle un premier 6M est déterminé en tant que dispositif passerelle maitre pour le dispositif émetteur faible énergie et un second 6B est désigné en tant que dispositif passerelle de sauvegarde. Pour se substituer au dispositif passerelle maitre associé audit dispositif émetteur faible énergie, le dispositif passerelle de sauvegarde comporte une copie d'une table de liens du dispositif passerelle maitre. Avantageusement, cette copie limitée au dispositif passerelle de sauvegarde permet de limiter la taille mémoire de chaque dispositif passerelle.

Les dispositifs passerelle 6, 6A, 6M, 6B de la zone de réception reçoivent le message de l'émetteur 1 faible énergie. Puis ils communiquent entre eux pour déterminer le dispositif passerelle 6M maitre ayant la meilleure qualité de réception. Ce dispositif maitre 6M communiquera prioritairement vers le réseau 5 avec le dispositif destinataire cible 2 (liaison 7 sur la figure 2). Le dispositif maitre désigne un dispositif passerelle de sauvegarde 6B ayant la seconde meilleure qualité de réception. Le dispositif 6B de sauvegarde se substitue au dispositif maitre pour la communication de message au dispositif destinataire en cas d'indisponibilité ou de défaillance du dispositif maitre. En cas de non envoi du message par les dispositifs maitre et sauvegarde d'autres dispositifs passerelle 6A de la zone de réception déterminent un nouveau dispositif passerelle maitre pour l'envoi des messages vers la cible. Ce processus de détermination d'un nouveau dispositif passerelle maitre peu être déclenché lorsque l'ancien dispositif maitre n'a plus la meilleure qualité de réception ou lorsque l'émetteur à faible énergie et déplacé.

Un tel fonctionnement permet aussi à un quelconque des dispositifs de la zone de réception de recevoir le message à faible énergie et de le transmettre au dispositif maitre. Ensuite, le dispositif maitre qui n'a pas reçu directement le signal va transmettre le message à la cible. Cette possibilité permet d'accroitre de façon significative la fiabilité du système sans trop accroitre le trafic.

Pour identifier la meilleure qualité de réception, chaque dispositif passerelle possède un indicateur de qualité de réception RQI qu'il associe à chaque message reçu et/ou au numéro de séquence SqN dudit message faible énergie et à l'adresse ou à l'identifiant des dispositifs. Cet indicateur est mémorisé et envoyé aux autres dispositifs passerelle de la zone de réception avec le numéro de séquence et les identifiants pour déterminer le dispositif passerelle maitre. Lors de ce processus d'échange, les dispositifs passerelle de la zone de réception possèdent une table avec les adresses ou identifiants des dispositifs passerelle concernés et leur indicateur de qualité de réception RQI. Celui des dispositifs passerelle qui a l'indicateur de qualité de réception RQI le plus élevé est défini comme le dispositif maitre. Si des dispositifs ont un même RQI le plus élevé, alors une autre condition supplémentaire peut être utilisée comme leur valeur l'adresse, la plus haute ou la plus basse.

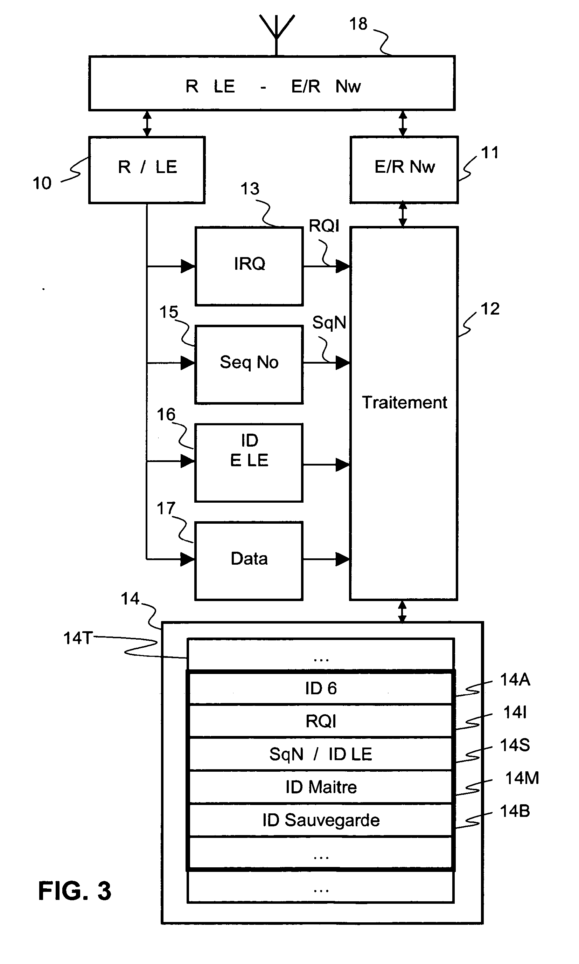

La figure 3 montre un schéma block d'un dispositif passerelle 6 selon un mode de réalisation de l'invention. Le dispositif de communication passerelle pour réseaux de communication sans fil comporte un module 10 de réception de messages de communication émis par des émetteurs à faible énergie 1, un module 11 d'émission et de réception de messages pour communiquer avec un réseau de communication 5, et un circuit de traitement 12 de messages de communication ayant des trames comportant au moins un identifiant d'un dispositif émetteur, un numéro séquentiel de message, et des données.

Un tel dispositif passerelle comporte aussi un module 13 de détermination d'un indicateur de qualité de réception RQI associé à chaque message d'un émetteur faible énergie reçu, un module 14 de mémorisation pour mémoriser l'indicateur de qualité de réception. Le circuit de traitement 12 traite la réception de messages de notification émis par d'autres dispositifs passerelle. Les messages comportent dans leurs trames un identifiant du dispositif passerelle émetteur 14A, un indicateur de qualité de réception RQI, 14I associé, un numéro de séquence SqN, 14S dudit message, et un identifiant d'émetteur faible énergie. Le circuit 12 stocke ces informations dans une table 14T du module 14 de mémorisation. Le circuit de traitement 12 traite la détermination d'un dispositif passerelle maitre basés sur des indicateurs de qualité de réception des dispositifs passerelle situés dans une zone A de réception de messages émis par l'émetteur à faible énergie. Ainsi, le dispositif passerelle ayant l'indicateur de qualité de réception le plus élevé est sélectionné pour être le dispositif passerelle maitre.

Sur la figure 3 le dispositif passerelle comporte un module 15 pour traiter un numéro séquentiel SqN, un module 16 pour traiter un identifiant, et un module 17 pour traiter des données présentes dans des messages reçus depuis un émetteur à faible énergie.

Un module dispositif passerelle maitre a dans son module de mémorisation 11 des informations l'identifiant en tant que dispositif passerelle maitre pour un dispositif émetteur faible énergie. Son circuit de traitement 12 traite prioritairement par rapport aux autres dispositifs l'émission en priorité dans le réseau de messages venant dudit émetteur faible énergie. Le module de mémorisation 14 du dispositif passerelle maitre 6M mémorise aussi les identifiants des autres dispositifs passerelle situés dans ladite zone de réception. Ainsi le circuit de traitement comporte une fonction d'acquittement pour envoyer aux autres dispositifs passerelle de la zone de réception une indication que le message est envoyé audit dispositif destinataire 2.

Un dispositif de communication selon un mode de revendication de l'invention peut être aussi désigné en tant que dispositif passerelle de sauvegarde. La détermination d'un dispositif passerelle de sauvegarde est basée aussi sur les indices de qualité de réception RQI des dispositifs passerelle situés dans une zone de réception de messages émis par l'émetteur à faible énergie. Ainsi, le dispositif passerelle ayant l'indicateur de qualité de réception le plus élevé après celui dudit dispositif passerelle maitre 6M est sélectionné pour être ledit dispositif 6B passerelle de sauvegarde. Le module de mémorisation 14 mémorise une copie des identifiants de dispositifs passerelle situé, dans ladite zone de réception et mémorisés dans ledit dispositif passerelle maitre ainsi que copie d'une table de liens relative à l'émetteur à faible énergie. Le circuit de traitement d'un dispositif passerelle de sauvegarde comporte aussi une fonction d'acquittement pour envoyer aux autres dispositifs passerelle de la zone de réception une indication que le message est envoyé audit dispositif destinataire en cas de non disponibilité dudit dispositif passerelle maitre.

De préférence, les dispositifs passerelle comportent un seul émetteur/récepteur radio 18 pour recevoir les messages de l'émetteur 1 à faible énergie et pour communiquer de manière bidirectionnelle avec le réseau 5.

Un procédé de communication selon un mode de réalisation de l'invention est destiné aux réseaux de communication sans fil comportant au moins un dispositif d'émission faible énergie et au moins deux dispositifs passerelle pouvant recevoir des messages d'un dispositif à faible énergie et pour communiquer avec un réseau en émission et réception des messages. Dans ce procédé des étapes suivantes sont présentes dans plusieurs phases de fonctionnement :
- l'envoi par un dispositif d'émission 1 faible énergie d'un message destiné à au moins un dispositif destinataire cible 2,
- la réception par au moins deux dispositifs passerelle 6, 6A, 6B, 6M dudit message, et
- la détermination d'un dispositif passerelle maitre 6M pour ledit dispositif émetteur faible énergie. La sélection d'un dispositif passerelle maitre est basée sur les indicateurs de qualité de réception RQI. Ainsi, le dispositif ayant l'indicateur de qualité de réception le plus élevé parmi des dispositifs passerelle recevant les messages dudit dispositif à faible énergie devient le dispositif passerelle maitre.

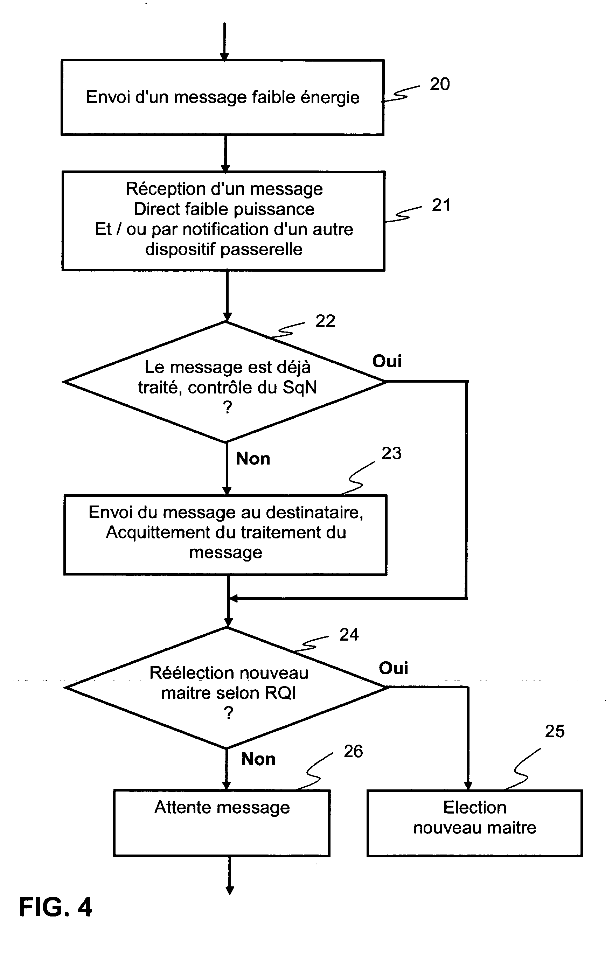

La figure 4 représente un premier organigramme de fonctionnement d'un dispositif passerelle maitre. A une étape 20, un dispositif d'émission faible énergie envoie un message dans une zone de réception limitée. A une étape 21, un dispositif passerelle maitre reçoit directement et/ou par l'intermédiaire d'un autre dispositif passerelle le message identifié par un numéro de séquence et un numéro d'identification de l'émetteur à faible énergie. Une étape 22 opère le contrôle du traitement du message en vérifiant si le message est déjà traiter par le dispositif passerelle maitre. Si le message n'est pas encore traité, à une étape 23, le dispositif maitre traite le message, l'envoie au destinataire et notifie l'acquittement aux autres dispositifs de la zone de réception dont les adresses ou les identifiants sont mémorisés dans le dispositif maitre. Puisque le dispositif a reçu le message directement et à travers les autres dispositifs de la zone une réélection d'un nouveau dispositif passerelle maitre peut être déclenchée en fonction des différent indicateurs de qualité de réception à des étapes 24 et 25. Cette désignation n'est pas obligatoirement systématique à chaque message elle peu être conditionnée par des événements particuliers comme la défaillance d'un dispositif maitre ou de sauvegarde ou espacée dans le temps. Ensuite à une étape 26 il y a l'attente d'un nouveau message.

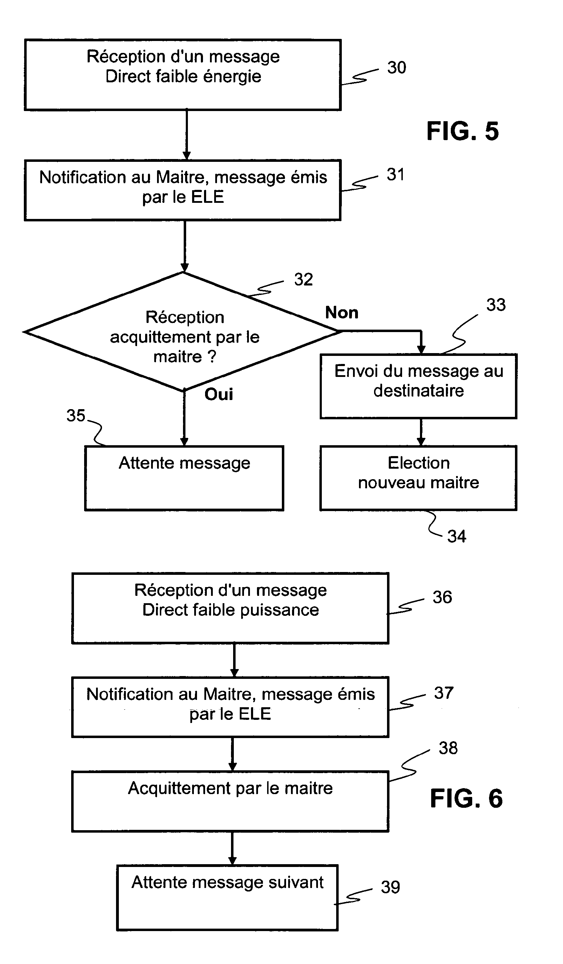

Un second organigramme sur la figure 5 représente le fonctionnement d'un dispositif passerelle de sauvegarde. A une étape 30, le dispositif passerelle de sauvegarde reçoit un nouveau message d'un émetteur à faible énergie. Puis il notifie le message au dispositif maitre associé à l'étape 31. Une étape 32 contrôle la réception de l'acquittement qui doit être envoyé par le dispositif maitre. Si l'acquittement n'est pas reçu, le dispositif passerelle de sauvegarde envoi le message au destinataire à une étape 33 et déclenche l'élection d'un nouveau dispositif passerelle maitre à l'étape 34. Sinon, à une étape 35 il y a l'attente d'un nouveau message.

Les autres dispositifs de la zone de réception d'un émetteur à faible énergie fonctionnent en redondance de réception selon un organigramme représenté sur la figure 6. La réception d'un message basse énergie par un dispositif passerelle de la zone de réception est faite à une étape 36. Pendant ce temps, un dispositif passerelle maitre reçoit aussi ce message à l'étape 21. A une l'étape 37 le message est notifié par le dispositif passerelle de la zone de réception au dispositif passerelle maitre associé. Puis à l'étape 38, le dispositif passerelle de la zone reçoit l'acquittement par ledit dispositif maitre de l'envoi du message à un dispositif destinataire 2. Ensuite, à une étape 39 il y a l'attente d'un nouveau message.

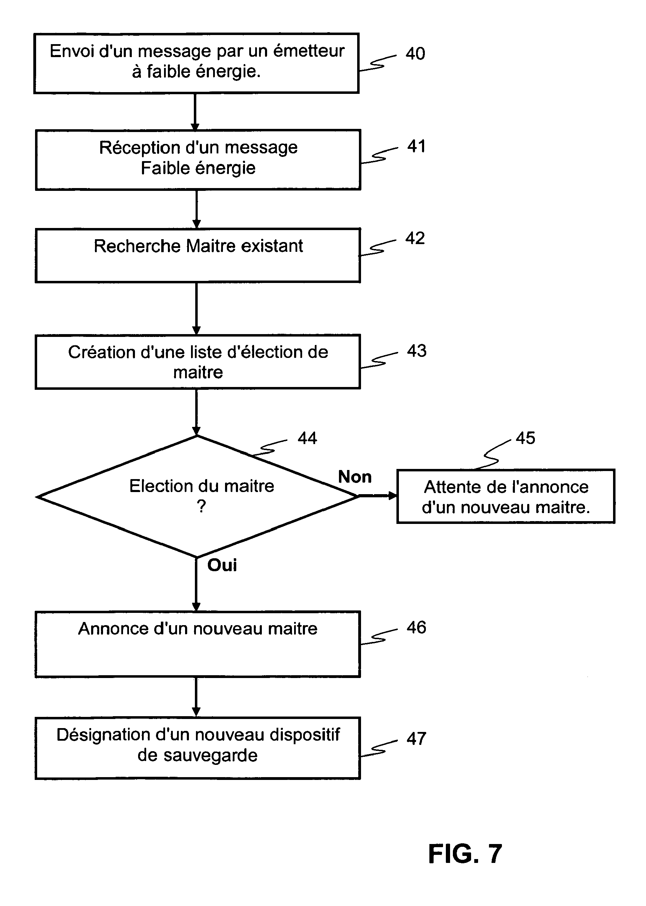

La figure 7 représente un organigramme de détermination d'un dispositif passerelle maitre dans un procédé selon un mode de réalisation de l'invention. La détermination d'un nouveau dispositif passerelle maitre peut être faite automatiquement à l'initialisation, lorsque l'ancien dispositif passerelle maitre est défaillant, lorsque l'ancien dispositif passerelle maitre n'a plus le meilleur indice de qualité de réception et/ou lorsque le dispositif émetteur basse énergie est déplacé.

A une étape 40, un message destiné à au moins un dispositif cible est envoyé par un émetteur à faible énergie. Au moins deux dispositifs passerelle reçoivent le message à faible énergie à une étape 41. Ensuite, la détermination d'un dispositif passerelle maitre pour ledit dispositif émetteur faible énergie est faite par la sélection d'un dispositif passerelle ayant un indicateur de qualité de réception le plus élevé parmi des dispositifs passerelle recevant les messages dudit dispositif à faible énergie. A une étape 42, il y a la vérification de la présence d'un dispositif maitre ancien. Une étape 43 permet d'établir une liste d'élection du dispositif maitre en mémorisant les identifiant des dispositifs de la zone de réception et leurs indicateurs de qualité de réception associé pour un message donné repéré par son numéro de séquence. Une étape 44 contrôle l'élection du dispositif maitre. Si le dispositif recevant le signal n'est pas le nouveau maitre, il attend à une étape 45 l'annonce d'un nouveau maitre venant par une notification émise sur le réseau. Si le dispositif recevant le signal du message est déterminé comme le nouveau maitre, il l'annonce aux autres dispositifs de la zone à travers le réseau à une étape 46. Ensuite, à une étape 47, le nouveau dispositif passerelle maitre désigne le nouveau dispositif passerelle de sauvegarde. La désignation du dispositif passerelle de sauvegarde est basés sur des indices de qualité de réception des dispositifs passerelle situés dans une zone de réception de messages émis par ledit émetteur à faible énergie. Ainsi, le dispositif passerelle ayant l'indicateur de qualité de réception le plus élevé après celui dudit dispositif passerelle maitre est sélectionné pour être ledit dispositif passerelle de sauvegarde,

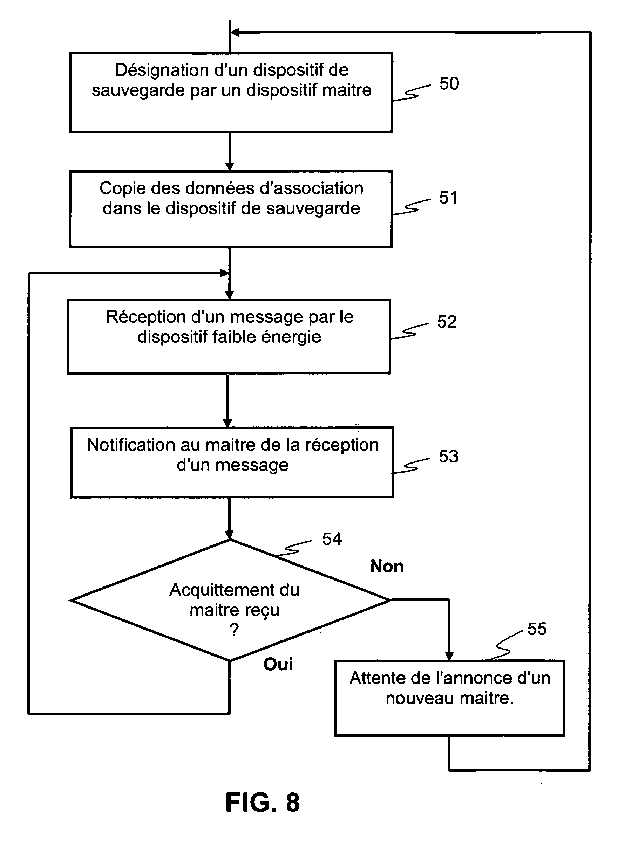

La figure 8 représente un organigramme de désignation d'un dispositif passerelle de sauvegarde d'un procédé selon un mode de réalisation de l'invention. La désignation d'un dispositif passerelle de sauvegarde est prévue pour sauvegarder des données d'association entre le dispositif passerelle maitre, le dispositif destinataire et le dispositif émetteur faible énergie. La désignation d'un dispositif passerelle de sauvegarde par un dispositif passerelle maitre est réalisée à une étape 50.

La copie des données d'association du dispositif passerelle maitre dans une table dudit dispositif passerelle de sauvegarde est réalisée à une étape 51. Ainsi, à une étape 52 le dispositif passerelle de sauvegarde reçoit un message d'un émetteur à faible énergie. A une étape 53, il notifie la réception du message au dispositif maitre. Une étape 54 contrôle la réception de l'acquittement devant venir du dispositif maitre. Si l'acquittement n'est pas reçu, il y a détermination d'un nouveau dispositif passerelle maitre à une étape 55. Dans ce cas, le dispositif passerelle de sauvegarde procède à l'envoi du message au dispositif destinataire en cas de défaillance dudit dispositif passerelle maitre. Si l'acquittement est reçu, il y a attente d'un nouveau message à faible énergie.

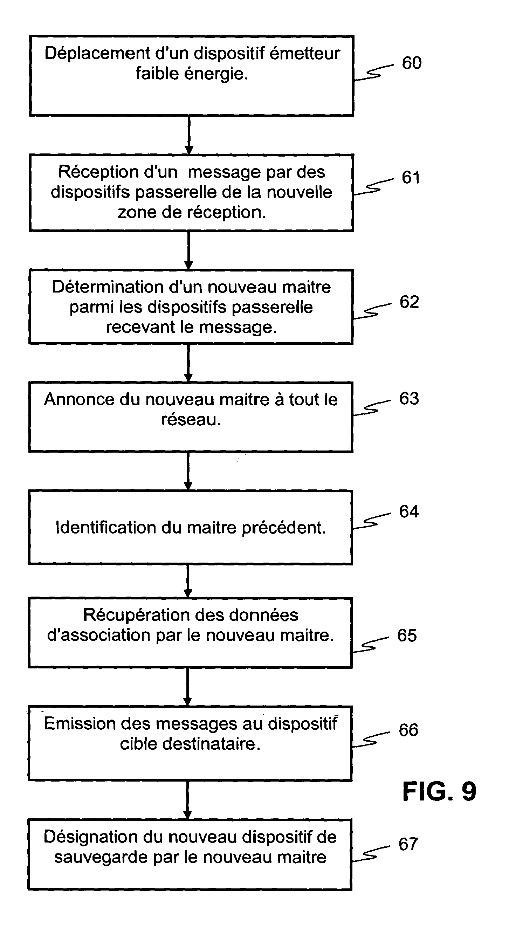

La figure 9 représente un organigramme de traitement d'un déplacement d'un dispositif émetteur faible énergie d'un procédé selon un mode de réalisation de l'invention. Pour le traitement de la mobilité, une étape 60 indique le déplacement d'un dispositif émetteur à basse énergie d'une première zone A1 à une seconde zone de réception A2. A une étape 61, il y a la réception d'un autre message émis par ledit émetteur à basse énergie dans la seconde zone de réception. Puis, la détermination d'un nouveau dispositif passerelle maitre parmi les dispositifs passerelle de la seconde zone recevant le message est réalisée à une étape 62. A une étape 63, le nouveau dispositif passerelle maitre est annoncé sur le réseau de communication. A une étape 64, le précédent dispositif maitre est identifié. Ce qui permet la récupération des données par le nouveau dispositif maitre à une étape 65. Des messages sont envoyés au dispositif destinataire à l'étape 66. La désignation d'un nouveau dispositif passerelle de sauvegarde par le nouveau dispositif passerelle maitre et réalisée à l'étape 67. Un tel procédé permet de déplacer un émetteur à faible énergie sans effectuer de nouveau paramétrage. L'adaptation est automatique même avec des changements de zones de réception très éloignées.

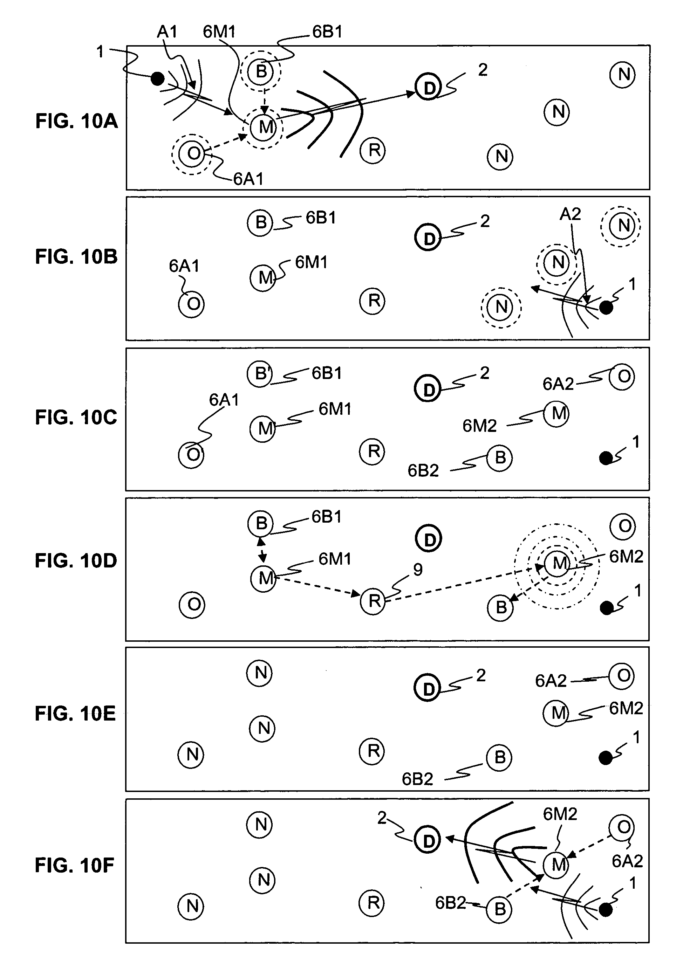

Les figures 10A à 10F illustrent le traitement d'un déplacement d'un dispositif émetteur faible énergie d'un procédé selon un mode de réalisation de l'invention. Sur la figure 10A un émetteur à faible énergie est situé dans une première zone A1. Un premier dispositif passerelle maitre 6M est déterminé et son dispositif de sauvegarde 6B1 est désigné. Un autre dispositif passerelle 6A1 de la zone A1 notifie les messages au dispositif maitre 6M1 qui transmet les messages au dispositif destinataire 2. Dans la figure 10B l'émetteur à faible énergie est déplacé dans une seconde zone A2 dans laquelle les anciens dispositifs passerelle ne peuvent plus recevoir. La figure 10C montre les nouveaux dispositifs pouvant recevoir les messages émis par l'émetteur 1 à faible énergie. Le processus de détermination du nouveau dispositif maitre 6M2, de la désignation du nouveau dispositif de sauvegarde 6B2 et des nouveaux dispositifs 6A2 de redondance de zone est lancé. Sur la figure 10D, le nouveau dispositif passerelle maitre 6M2 récupère les informations de l'ancien dispositif maitre à travers le réseau. Ces informations peuvent avantageusement traverser plusieurs noeuds 9 d'un réseau maillé, elles peuvent aussi être fournies par l'ancien dispositif de sauvegarde 6B1. Sur la figure 10E, les anciens dispositifs passerelle sont désactivés par notification sur le réseau. Sur la figure 10F, le nouveau système fonctionne dans la nouvelle zone A2, la plupart des messages de l'émetteur à faible énergie étant transmis au dispositif destinataire cible à travers le dispositif passerelle maitre 6M2.

Les dispositifs émetteurs à basse énergie autoalimentés émettent des messages courts. Ces messages sont de préférence envoyés plusieurs fois pour augmenter la probabilité de réception. Pendant la répétition des messages, le numéro de séquence ne change pas.

Les dispositifs de communication passerelle décrits ci-dessus peuvent prendre plusieurs formes notamment de simples passerelles ou de dispositifs désignés habituellement par le terme "PROXY" effectuant certaines fonctions de communication à la place des autres.

## Revendications

1. Dispositif de communication passerelle pour réseaux de communication sans fil comportant :
- des moyens (10) de réception de messages de communication émis par des émetteurs (1) à faible énergie.
- des moyens (11, 18) d'émission et de réception de messages d'un réseau (5) de communication, et
- des moyens (12) de traitement de messages de communication,
**caractérisé en ce qu'**il comporte
- des moyens (13) de détermination d'un indicateur (RQI) de qualité de réception associé à chaque message reçu d'un émetteur à faible énergie,
- des moyens (14, 14A) de mémorisation dudit indicateur de qualité de réception,
- des moyens (11, 12, 21, 31, 37, 53) de réception de messages de notification émis par d'autres dispositifs passerelle (6, 6A, 6B) d'une zone de réception (A) et comportant dans leurs trames un identifiant du dispositif passerelle émetteur, un indicateur de qualité de réception (RQI) associé et un numéro de séquence (SqN) dudit message,
- des moyens (12, 14, 25, 34, 43, 44, 62) de détermination d'un dispositif passerelle maitre basés sur des indicateurs de qualité de réception (RQI) des dispositifs passerelle situés dans ladite zone de réception (A) de messages émis par ledit émetteur (1) à faible énergie, le dispositif passerelle ayant l'indicateur de qualité de réception (RQI) le plus élevé est sélectionné pour être ledit dispositif passerelle maitre,
- des moyens de mémorisation (14, 14M) en tant que dispositif passerelle maitre pour un dispositif émetteur (1) faible énergie et des moyens d'émission (11, 18) en priorité dans le réseau de messages venant dudit émetteur faible énergie,
- des moyens de mémorisation (14, 14A) des identifiants de dispositifs passerelle (6A, 6b, 6M) situé dans ladite zone de réception (A), et
- des moyens d'acquittement (12, 23, 32, 38) pour envoyer aux autres dispositifs passerelle de la dite zone d'indication que le message est envoyé audit dispositif destinataire.

2. Dispositif de communication selon la revendication 1 **caractérisé en ce qu'**il comporte :
- des moyens de détermination d'un dispositif passerelle de sauvegarde (6B) basés sur des indicateurs de qualité de réception (RQI) des dispositifs passerelle situés dans une zone de réception de messages émis par ledit émetteur (1) à faible énergie, le dispositif passerelle ayant l'indicateur de qualité de réception le plus élevé après celui dudit dispositif passerelle maitre (6M) est sélectionné pour être ledit dispositif passerelle de sauvegarde (6B), et
- des moyens de mémorisation (14, 14B) pour mémoriser une copie des identifiants de dispositifs passerelle situés dans ladite zone de réception (A) mémorisés dans ledit dispositif passerelle maitre (6M).

3. Système de communication pour réseaux de communication sans fil comportant:
- au moins un réseau de communication (5),
- au moins un dispositif émetteur (1) faible énergie pour envoyer des messages à un dispositif destinataire (2) à travers ledit réseau de communication (5), et
- au moins deux dispositifs de communication passerelle (6, 6M, 6B) pouvant recevoir des messages dudit dispositif émetteur (1) à faible énergie et communiquer lesdits messages sur le réseau de communication (5),
**caractérisé en ce que** au moins deux dispositifs de communication passerelle sont des dispositifs de communication selon les revendications 1 ou 2, au moins un premier desdits dispositifs passerelle étant déterminé en tant que dispositif passerelle maitre (6M) pour le au moins un dispositif émetteur (1) faible énergie.

4. Système de communication selon la revendication 3 **caractérisé en ce que** au moins un second desdits dispositif passerelle est déterminé en tant que dispositif passerelle de sauvegarde (6B) pour le dispositif passerelle maitre (6M) associé audit dispositif émetteur (1) faible énergie, ledit dispositif passerelle de sauvegarde comportant une copie d'une table (14) de liens dudit dispositif passerelle maitre.

5. Procédé de communication pour réseaux de communication sans fil comportant au moins un dispositif d'émission faible énergie (1) et au moins deux dispositifs passerelle (6, 6A, 6B, 6M) pouvant recevoir des messages dudit dispositif à faible énergie et émettre et recevoir des messages du réseau de communication,
**caractérisé en ce que** le procédé comporte
- l'envoi (20) par un dispositif d'émission (1) faible énergie d'un message destiné à au moins un dispositif destinataire cible (2),
- la réception (21) par au moins deux dispositifs passerelle dudit message
- la détermination (25, 34, 43, 44, 62) d'un dispositif passerelle maitre pour ledit dispositif émetteur faible énergie par la sélection d'un dispositif passerelle ayant un indicateur de qualité de réception (RQI) le plus élevé parmi des dispositifs passerelle recevant les messages dudit dispositif à faible énergie, et
- la détermination (25, 34, 43, 44, 62) d'un nouveau dispositif passerelle maitre à l'initialisation automatique, lorsque l'ancien dispositif passerelle maitre est défaillant, lorsque l'ancien dispositif passerelle maitre n'a plus le meilleur indice de qualité de réception ou lorsque le dispositif émetteur faible énergie est déplacé.

6. Procédé de communication selon la revendication 5 **caractérisé en ce qu'**il comporte la désignation (47, 67) d'un dispositif passerelle de sauvegarde pour sauvegarder des données d'association entre ledit dispositif passerelle maitre (6M), ledit dispositif destinataire (2) et le dispositif émetteur (1) faible énergie.

7. Procédé de communication selon la revendication 6 **caractérisé en ce que** la désignation d'un dispositif passerelle de sauvegarde comporte la copie (51) desdites données d'association du dispositif passerelle maitre (6M) dans une table dudit dispositif passerelle de sauvegarde (6B).

8. Procédé de communication selon l'une des revendications 6 ou 7 **caractérisé en ce qu'**il comporte l'envoi (33) par un dispositif passerelle de sauvegarde (6B) de messages destinés à un dispositif destinataire en cas de défaillance dudit dispositif passerelle maitre (6M).

9. Procédé de communication selon l'une quelconque des revendications 5 à 8 **caractérisé en ce qu'**il comporte un traitement de redondance comportant :
- la réception (21) par un dispositif passerelle maitre d'un premier message basse énergie émis par un dispositif faible énergie dans sa zone de réception,
- la réception (30, 36) par un dispositif passerelle de ladite zone de réception dudit premier message basse énergie,
- la notification (21, 31, 37) dudit premier message par ledit dispositif passerelle de la zone de réception audit dispositif passerelle maitre, et
- l'acquittement (23, 32, 38) par ledit dispositif maitre de l'envoi du premier message à un dispositif destinataire.

10. Procédé de communication selon l'une quelconque des revendications 5 à 9 **caractérisé en ce qu'**il comporte un traitement de mobilité comportant:
- le déplacement (60) d'un dispositif émetteur à basse énergie,
- la réception (61) d'un second message émis par ledit. émetteur à basse énergie dans une seconde zone de réception,
- la détermination (62) d'un nouveau dispositif passerelle maitre parmi les dispositifs passerelle de ladite seconde zone recevant le second message,
- l'annonce (63) du nouveau maitre à au réseau de communication,
- l'identification (64) du maitre précédent,
- la récupération (65) des données par le nouveau maitre,
- l'émission (66) de messages au dispositif destinataire, et
- La désignation (67) d'un nouveau dispositif passerelle de sauvegarde par le nouveau dispositif passerelle maitre.
